# FASCICULE DE BREVET EUROPEEN

(11) **EP 0 541 628 B1**
(45) Date de publication et mention de la délivrance du brevet: **21.05.1997**
(21) Numéro de dépôt: 91913834.7
(22) Date de dépôt: 22.07.1991
(51) Int. Cl.: B60C 11/04, B60C 9/20, B60C 11/01

(54) **PNEUMATIQUE DOTE D'UNE BANDE DE ROULEMENT AYANT DES NERVURES LATERALES DONT LA SURFACE EST RADIALEMENT EN RETRAIT PAR RAPPORT AUX AUTRES NERVURES**
LUFTREIFEN MIT EINER LAUFFLÄCHE, DEREN SCHULTERRIPPEN RADIAL KÜRZER ALS DIE ZENTRALRIPPEN SIND
TYRE PROVIDED WITH A TREAD HAVING LATERAL RIBS WHOSE SURFACES ARE RADIALLY SET BACK IN RELATION TO THE OTHER RIBS

(30) Priorité: 27.07.1990 FR 9009727
(43) Date de publication de la demande: 19.05.1993
(73) Titulaire: COMPAGNIE GENERALE DES ETABLISSEMENTS MICHELIN - MICHELIN & CIE, 63040 Clermont-Ferrand Cédex (FR)
(72) Inventeur: LUROIS, Patrick, Greenville, SC 29605 (US)
(74) Mandataire: Devaux, Edmond-Yves
(86) Numéro de dépôt international: FR9100601
(87) Numéro de publication internationale: WO9202380

(56) Documents cités:
- EP-A- 0 384 182
- FR-A- 2 128 232
- FR-A- 2 303 675
- GB-A- 2 118 910

## Description

La présente invention se rapporte aux bandes de roulement neuves ou rechapées, pour pneumatiques à armature de carcasse radiale destinés à équiper les véhicules de transport et plus particulièrement les véhicules "Poids Lourds" susceptibles d'effectuer de longs trajets à vitesse soutenue.

Ces pneumatiques comportent en plus de l'armature de carcasse radiale, une armature de sommet composée d'au moins deux nappes superposées de câbles peu extensibles, de préférence en acier, croisés d'une nappe à la suivante en formant avec la direction circonférentielle des angles au plus égaux à 45°. Ces nappes sont dites nappes de travail. Le cas échéant, l'armature de sommet est avantageusement complétée, d'une part par une nappe ou deux demi-nappes, formées de câbles peu extensibles faisant avec la direction circonférentielle un angle compris entre 45° et 90°, et d'autre part par une ou plusieurs nappes formées de câbles élastiques placées radialement à l'extérieur des nappes de sommet à câbles peu extensibles et formant avec la direction circonférentielle un angle faible.

L'armature de sommet est surmontée d'une bande de roulement, qui comporte généralement plusieurs rainures circonférentielles qui ont des tracés soit rectilignes, soit en ligne brisée ou ondulée. Ces rainures circonférentielles ont des largeurs soit identiques, soit différentes. Dans ce dernier cas, certaines rainures sont larges et peuvent être associées sur la même bande de roulement à des rainures plus étroites.

Il est connu par le brevet FR 2 303 675, notamment en vue de remédier au phénomène d'usure anormale des pneumatiques équipant l'essieu directeur d'un véhicule poids-lourd, usure anormale consistant en l'effondrement des bords de la bande de roulement par rapport à la partie centrale de cette dernière, de diviser ladite bande de roulement en trois parties : une partie centrale et deux parties latérales telles que la partie centrale soit radialement saillante extérieurement par rapport aux parties latérales, évidées et donc radialement en retrait, et soit seule en contact avec le sol lors du roulage du pneumatique. La partie centrale précitée dépasse les parties latérales précitées d'une épaisseur radiale ou hauteur au moins égale à la profondeur d'usure théorique maximale admissible tandis que l'épaisseur de gomme radialement extérieure à la ceinture de renforcement correspond dans les parties latérales, à la valeur minimale admissible de recouvrement matériel de ladite ceinture, celle-ci étant avantageusement plus large que la partie centrale de la bande de roulement.

De telles bandes de roulement permettent un échauffement moindre au niveau des extrémités de ceinture de renforcement. Par ailleurs, comme les parties latérales évidées ne sont pas en contact avec le sol, et que les extrémités de la ceinture de renforcement sont éloignées de la partie centrale portante, la tendance à la séparation des nappes d'armature de sommet est diminuée.

En dépit de ce dernier avantage, de tels pneumatiques ne présentent pas un compromis satisfaisant des performances désirables en ce qui concerne d'une part les risques de séparation des extrémités des nappes de travail de l'armature de sommet ou de ces nappes et de l'armature de carcasse et d'autre part la bonne tenue des parties latérales vis-à-vis des coupures et de l'oxydation consécutive des câbles de l'armature.

L'invention est notamment basée sur l'observation surprenante que, si l'existence d'un retrait dans le profil méridien des nervures latérales par rapport à celui de la partie centrale était favorable à l'abaissement des températures qui s'établit dans le pneumatique au niveau de la jonction des nappes d'armature de sommet, cette amélioration s'atténuait et même s'inversait lorsque ce retrait était accru au delà d'une certaine limite.

Ainsi conformément à l'invention, on dote un pneumatique poids-lourd d'une armature de carcasse radiale, d'une armature de sommet formée d'au moins deux nappes de travail superposées de largeurs inégales et composées de câbles peu extensibles parallèles entre eux dans chaque nappe et croisés d'une nappe à la suivante en formant avec la direction circonférentielle un angle au plus égal à 45°, et d'une bande de roulement de largeur Lₒ comportant dans les zones latérales une rainure circonférentielle délimitant une nervure latérale dont le profil méridien est sensiblement parallèle au profil méridien de l'enveloppe géométrique de la zone médiane principale, et radialement en retrait par rapport audit profil, les largeurs d'au moins de deux nappes de travail ayant des câbles croisés de l'une à l'autre étant supérieures à la distance axiale L séparant les axes médians XX' des rainures latérales, caractérisé en ce que la différence de niveau h entre le profil méridien de la zone médiane et le profil méridien des nervures latérales de la bande de roulement, soit telle que le rapport h/H soit au plus égal à 0,40, H étant l'épaisseur de la bande de roulement mesurée dans le plan équatorial YY', et en ce que la différence L₀ - L soit comprise entre 38 et 80 mm.

Il est connu, par le brevet FR 2 525 535, que la différence de niveau entre le profil méridien de la zone médiane et le profil méridien des zones latérales, est comprise entre 40 et 200 % de la déflexion du pneumatique sous charge, cet intervalle de déflexion étant tel que les parties latérales de la bande de roulement, sous les conditions normales de charge et de pression, restent en contact avec le sol, la largeur axiale de la nervure latérale étant au plus égale à la profondeur maximale des rainures. La différence de niveau préconisée, combinée avec la faible largeur axiale de la nervure latérale permet un meilleur comportement sur route du véhicule équipé, en évitant en particulier « l'effet rail », et une amélioration notable de l'adhérence transversale des pneumatiques directeurs.

De telles bandes de roulement, avec nervures latérales radialement en retrait par rapport à la partie centrale, sont aussi décrites dans le document EP.A 0. 384.182, document antérieur, mais publié après la date de dépôt, et en particulier P 4 lignes 3 à 40 de la description correspondant à la figure 8 du dessin annexé au dit document.

De manière préférentielle, les largeurs d'au moins deux nappes ayant des câbles croisés de l'une à l'autre sont supérieures à la distance axiale L d'au moins 20 mm.

En vue de ne pas pénaliser le pneumatique en usure routière, il est avantageux que la largeur de la nervure latérale soit inférieure à la largeur de la nervure axialement adjacente à ladite nervure latérale. De même et comme connu, il est avantageux que les rainures latérales, distantes de la largeur L, aient des largeurs a comprises entre 0,6 et 8 mm suivant les dimensions de pneumatiques, et en restant toujours inférieures à 0,02 fois la largeur L₀ de la bande de roulement du pneumatique considéré.

En se référant au dessin annexé, ne comportant qu'une seule figure, on va décrire des exemples non limitatifs de mise en oeuvre de l'invention.

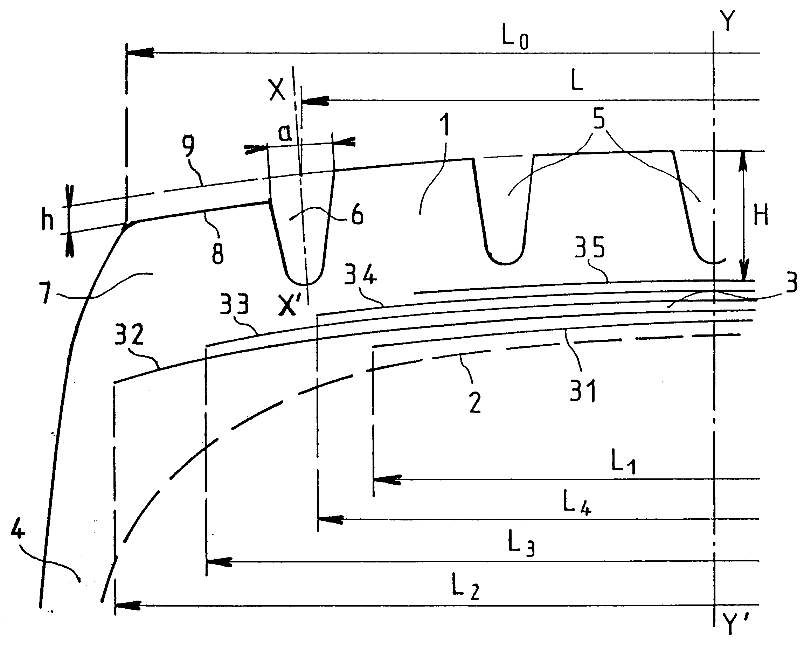

On voit sur la figure 1 la moitié de la bande de roulement (1) d'un pneumatique à carcasse radiale (2) renforcé par une armature de sommet (3). Celle-ci est formée de quatre nappes (31 à 34) dites de travail et composées de câbles pratiquement inextensibles, parallèles entre eux dans chaque nappe et croisés de la nappe (31) à la nappe (32), de la nape (32) à la nappe (33), et ainsi de suite, en faisant avec la direction circonférentielle un angle de 18°. En outre, cette armature de travail est complétée par une nappe (35) de protection formée de câbles élastiques faisant avec la direction circonférentielle des angles de 18°.

La bande de roulement se prolonge de chaque côté par un flanc (4), et comporte de manière connue des rainures circonférentielles (5), (6) qui peuvent avoir des largeurs différentes, des tracés circulaires ou ondulés ou en zigzag.

Dans la zone latérale de la bande de roulement (1), la rainure circonférentielle (6) délimite une nervure latérale (7) dont le profil méridien (8) est parallèle et intérieur au profil méridien (9) de l'enveloppe géométrique de la zone médiane principale de la bande de roulement (1).

Dans le cas d'un pneumatique radial de dimensions 11 R 22.5, cette rainure (6) a, par exemple, une largeur a de 4 mm, soit 2 % de la largeur de la bande de roulement L₀ de 200 mm. La différence h de niveau entre le profil (8) et le profil méridien (9) est de 4 mm, alors que l'épaisseur H de la bande de roulement mesurée dans le plan équatorial YY' est de 21 mm, ce qui donne un rapport h/H égal à 0,19.

La distance axiale L entre les axes médians XX' des rainures circonférentielles (6) est égale à 140 mm, soit la différence L₀-L égale à 60 mm. Si l'on considère les quatre nappes de travail (31, 32, 33, 34), au moins deux de ces nappes (32) et (33) ont des largeurs L₂ et L₃ supérieures à la largeur L d'au moins 20 mm, L₂ étant précisément égale à 170 mm et L₃ à 162 mm, toutes ces largeurs étant centrées sur la trace du plan équatorial YY'.

Un autre exemple (non montré) conforme à l'invention consiste à avoir la même bande de roulement (1) que celle décrite et montrée sur la Fig. 1, avec une armature de sommet composée seulement de deux nappes de travail (32) et (33), mais complétées par une nappe de triangulation de câbles peu extensibles orientés à 65°, et par une nappe de protection ayant la largeur de la nape (34) de l'exemple décrit.

Ce deuxième type de pneumatique conforme à l'invention a fait l'objet d'essais intensifs, et en particulier de roulage sur autoroute dans la dimension 385/65 R 22.5. Sous des conditions de charge 5 000 kg/pneumatique et de pression 8 bars à froid, et pour une vitesse moyenne de 105 km/heure, des pneumatiques témoins ont réalisé une moyenne de 25 490 kms (6 pneumatiques) pour qu'apparaissent les signes évidents de séparations inter-nappes, alors que les pneumatiques conformes à l'invention ont réalisé en moyenne 92 100 kms (4 pneumatiques) pour qu'apparaissent les mêmes signes.

## Revendications

1. Pneumatique pour Poids Lourd doté d'une armature de carcasse radiale (2), d'une armature de sommet (3) formée d'au moins deux nappes de travail (31, 32, 33, 34) de largeurs inégales et composées de câbles peu extensibles parallèles entre eux dans chaque nappe et croisés d'une nappe à la suivante en formant avec la direction circonférentielle un angle au plus égal à 45°, et d'une bande de roulement (1), de largeur Lo et comportant dans chaque zone latérale une rainure (6) circonférentielle délimitant une nervure latérale (7) dont le profil méridien est sensiblement parallèle au profil méridien (9) de l'enveloppe géométrique de la zone médiane principale, et radialement en retrait par rapport audit profil, les largeurs (L1, L2, L3, L4) d'au moins deux nappes de travail ayant des câbles croisés de l'une à l'autre étant supérieures à la distance axiale L séparant les axes médians XX' des rainures latérales (6), caractérisé en ce que la différence de niveau h entre le profil méridien de la zone médiane et le profil méridien des nervures latérales (7) de la bande de roulement (1) soit telle que le rapport h/H soit au plus égal à 0,40, H étant l'épaisseur de la bande de roulement (1) mesurée dans le plan équatorial YY', et en ce que la différence Lo-L soit comprise entre 38 et 80 mm.

2. Pneumatique selon le revendication 1, caractérisé en ce que les largeurs (L₁, L₂, L₃, L₄) d'au moins deus nappes ayant des câbles croisés de l'une à l'autre soient égales ou supérieures à la quantité L + 20 mm.

3. Pneumatique selon l'une des revendications 1 à 2, caractérisé en ce que les largeurs (L₁, L₂, L₃, L₄) diffèrent l'une de l'autre d'au moins 4 mm.

4. Pneumatique selon l'une des revendications 1 à 3, caractérisé en ce que la largeur de la nervure latérale (7) est inférieure à la largeur de la nervure axialement adjacente à ladite nervure latérale (7).

5. Pneumatique selon l'une des revendications 1 à 4, caractérisé en ce que la rainure circonférentielle (6) a une largeur a comprise entre 0,6 et 8 mm en étant inférieure à 0,02 fois la largeur L₀ de la bande de roulement (1).

## Claims

1. A tyre for heavy goods vehicles provided with a radial carcass reinforcement (2), a crown reinforcement (3) formed of at least two working plies (31, 32, 33, 34) of unequal widths and formed of only slightly stretchable cables parallel to each other in each ply and crossed from one ply to the next forming an angle of at most 45° with the circumferential direction, and of a width L₀ and comprising in each lateral zone a circumferential groove (6) defining a lateral rib (7), the meridian profile of which is substantially parallel to the meridian profile (9) of the geometrical envelope of the principal median zone, and radially recessed with respect to said profile, the widths (L₁, L₂, L₃, L₄) of at least two working plies having cables crossed from one ply to the other being greater than the axial distance L between the median axes XX' of the lateral grooves (6), characterised in that the difference in level h between the meridian profile of the median zone and the meridian profile of the lateral ribs (7) of the tread (1) is such that the ratio h/H is at most equal to 0.40. H being the thickness of the tread (1) measured in the equatorial plane YY', and in that the difference L₀-L is between 38 and 80 mm.

2. A tyre according to Claim 1, characterised in that the widths (L₁, L₂, L₃, L₄) of at least two plies having cables crossed from one ply to the other are equal to or greater than the quantity L + 20 mm.

3. A tyre according to one of Claims 1 to 2, characterised in that the widths (L₁, L₂, L₃, L₄) differ from each other by at least 4 mm.

4. A tyre according to one of Claims 1 to 3, characterised in that the width of the lateral rib (7) is less than the width of the rib axially adjacent to said lateral rib (7).

5. A tyre according to one of Claims 1 to 4, characterised in that the circumferential groove (6) has a width a of between 0.6 and 8 mm, being less than 0.02 times the width (L₀) of the tread (1).

## Patentansprüche

1. Schwerlast-Luftreifen, der mit einem Radialkarkassenmantel (2), einem Scheitelmantel (3), der aus mindestens zwei Arbeitslagen (31, 32, 33, 34) mit ungleichen Breiten gebildet ist, die aus wenig dehnbaren, in jeder Lage zueinander parallelen Seilen zusammengesetzt sind, die von einer Lage zur folgenden unter Bildung eines Winkels von höchstens 45° zur Umfangsrichtung überkreuzt sind, und mit einer Lauffläche (1) mit einer Breite Lo ausgestattet ist, die in jedem seitlichen Bereich eine Umfangsrille (6) aufweist, die eine seitliche Rippe (7) begrenzt, deren Meridianprofil im wesentlichen parallel ist zum Meridianprofil (9) der geometrischen Hüllkurve des Haupt-Mittelbereichs, und die radial in Bezug auf das genannte Profil zurückgesetzt ist, wobei die Breiten (L1, L2, L3, L4) mindestens zweier Arbeitslagen, die Seile aufweisen, die zueinander überkreuzt sind, größer ist als der axiale Abstand L, der die Mittelachsen XX' der seitlichen Rillen (6) trennt, dadurch gekennzeichnet, daß der Höhenunterschied h zwischen dem Meridianprofil des Mittelbereichs und dem Meridianprofil der seitlichen Rippen (7) der Lauffläche (1) so ist, daß das Verhältnis h/H höchstens gleich 0,40 ist, wobei H die Dicke der Lauffläche (1) ist, gemessen in der Äquatorialebene YY', und daß die Differenz Lo - L zwischen 38 und 80 mm liegt.

2. Luftreifen nach Anspruch 1, dadurch gekennzeichnet, daß die Breiten (L₁, L₂, L₃, L₄) mindestens zweier Lagen, die zueinander überkreuzte Seile aufweisen, gleich sind der oder größer sind als die Größe L + 20 mm.

3. Luftreifen nach einem der Ansprüche 1 bis 2, dadurch gekennzeichnet, daß die Breiten (L₁, L₂, L₃, L₄) sich voneinander um mindestens 4 mm unterscheiden.

4. Luftreifen nach einem der Ansprüche 1 bis 3, dadurch gekennzeichnet, daß die Breite der seitlichen Rippe (7) kleiner ist als die Breite der Rippe, die axial der genannten seitlichen Rippe (7) benachbart ist.

5. Luftreifen nach einem der Ansprüche 1 bis 4, dadurch gekennzeichnet, daß die Umfangsrille (6) eine Breite a aufweist, die zwischen 0,6 und 8 mm liegt und dabei kleiner ist als das 0,02 - fache der Breite Lₒ der Lauffläche (1).
